# EUROPÄISCHE PATENTSCHRIFT

(11) **EP 1 651 786 B1**
(45) Veröffentlichungstag und Bekanntmachung des Hinweises auf die Patenterteilung: **07.01.2009**
(21) Anmeldenummer: 04762581.9
(22) Anmeldetag: 03.08.2004
(51) Int. Cl.: C22C 9/02, C22C 9/04, C22C 9/06, B23K 1/00

(54) **HARTLOTLEGIERUNG AUF KUPFERBASIS SOWIE VERFAHREN ZUM HARTLÖTEN**
BRAZING SOLDER ALLOY BASED ON COPPER AND METHOD FOR BRAZING
ALLIAGE DE BRASAGE A BASE DE CUIVRE ET PROCEDE DE BRASAGE

(30) Priorität: 04.08.2003 DE 10335947
(43) Veröffentlichungstag der Anmeldung: 03.05.2006
(73) Patentinhaber: Vacuumschmelze GmbH & Co. KG, 63450 Hanau (DE)
(72) Erfinder: HARTMANN, Thomas, 63674 Altenstadt (DE); NÜTZEL, Dieter, 63512 Hainburg (DE)
(74) Vertreter: Schäfer, Horst
(86) Internationale Anmeldenummer: PCT/DE2004/001736
(87) Internationale Veröffentlichungsnummer: WO 2005/014870

(56) Entgegenhaltungen:
- EP-A- 0 429 026
- DE-C- 878 865
- FR-A- 894 529
- RU-C- 2 041 783
- US-A- 4 489 136
- PATENT ABSTRACTS OF JAPAN Bd. 0010, Nr. 53 (C-013), 23. Mai 1977 (1977-05-23) -& JP 52 011124 A (FURUKAWA ELECTRIC CO LTD:THE; others: 01), 27. Januar 1977 (1977-01-27)

## Beschreibung

Die Erfindung betrifft eine Hartlotlegierung auf Kupferbasis sowie ein Verfahren zum Hartlöten zweier oder mehrerer Metallteile.

Hartlotlegierungen auf Kupferbasis sind bspw. aus der EP 0 103 805 A2 bekannt. Die dort beschriebenen Hartlotlegierungen auf Kupferbasis weisen eine zumindest zu 50 % amorphe Struktur auf und haben eine Zusammensetzung, die aus 5 bis 52 Atom% Nickel, 2 bis 10 Atom% Zinn und 10 bis 15 Atom% Phosphor, Rest Kupfer sowie beiläufigen Verunreinigungen besteht. Die Gesamtheit an Kupfer, Nickel und Zinn liegt dabei im Bereich von etwa 85 bis 90 Atom%.

Des weiteren ist aus der RU 2041783 C1 eine amorphe Kupferbasis-Hartlotlegierung bekannt, die aus 5 bis 20 Atom% Nickel, 20 bis 10 Atom% Zinn, 10 bis 15 Atom% Phosphor, Rest Kupfer besteht, der man zur Verbesserung der Benetzbarkeit eines oder mehrere der Elemente Gallium, Indium, Wismut, Blei, Cadmium und/oder Zink in Mengen von 0,01 bis maximal 0,5 Atom% zugibt.

Beide eingangs genannten Kupferbasis-Hartlote weisen Phosphor als Legierungselement auf, da dadurch eine Absenkung der Schmelztemperatur und damit der Verarbeitungstemperatur des Hartlotes gegenüber anderen Kupferbasis-Hartloten bewirkt werden kann. Die eingangs genannten Hartlote sind außerdem auf Grund ihres Phosphorgehaltes selbstfließend und können ohne Flußmittel zum stoffschlüssigen Fügen von Kupfer und Kupferlegierungen, bspw. Messing, eingesetzt werden. Die eingangs genannten Kupfer-Nickel-Zinn-Phosphor-Hartlote weisen Liquidustemperaturen von deutlich unter 750 °C auf und stellen somit die Kupferbasis-Hartlote mit den niedrigsten Verarbeitüngstemperaturen überhaupt dar.

Die eingangs genannten Kupfer-Nickel-Zinn-Phosphor-Hartlotlegierungen lassen sich als Pulver, als Pasten, als Drähte oder als amorphe Folien herstellen. Pulver werden typischerweise über Schmelzverdüsung hergestellt. Pasten werden durch Vermischen der Metallpulver mit organischen Bindemitteln und Lösungsmitteln hergestellt.

Aufgrund der intrinsischen Sprödigkeit der genannten Kupfer-Nickel-Zinn-Phosphor-Legierungen stellt jedoch die Rascherstarrungstechnologie die einzige Möglichkeit dar, solche Hartlote in Form von homogenen und duktilen Folien herzustellen.

Es hat sich gezeigt, dass die eingangs genannten Kupfer-Nickel-Zinn-Phosphor-Legierungen zu einer sehr starken Oberflächenoxidation neigen, insbesondere, wenn sie längere Zeit hoher Luftfeuchtigkeit ausgesetzt werden, so dass es auf den Oberflächen der hergestellten Legierungsbänder zu Verfärbungen und Fleckenbildung kommt. Die Folienoberflächen weisen dann violette und/oder grünliche oder bläuliche Verfärbungen auf, die sich über große Folienabschnitte erstrecken können. Diesem Phänomen kann auch durch die Lehre der RU 2041783 C1 nicht befriedigend abgeholfen werden. Die dort gelehrten Zusätze an gallium, Indium, Cadmium und Zink bewirken keinen oder einen nur sehr schlechten Schutz vor Oberflächenoxidationen.

Die auftretende starke Oberflächenoxidation kann in hohem Maße die Löteigenschaften der genannten Legierungen negativ beeinflussen. Es kommt insbesondere zu deutlich schlechterem Fließ- und Benetzungsverhalten.

Des weiteren kann es dann dazu kommen, dass die Fügestellen nur unvollständig mit Hartlot ausgefüllt werden, so dass die mechanische Stabilität der zu fügenden Teile nicht mehr zuverlässig gewährleistet werden kann. Solche Fügefehler beim Hartlöten von Wärmetauschern oder anderen ähnlichen Produkten kann dann zu einem starken Abfall der dort geforderten Wärmeübertragungsraten führen.

Bisher ist man diesem Problem dadurch begegnet, dass man die eingangs genannten Kupferbasis-Hartlotlegierungen aufwendig verpackt hat, insbesondere unter Vakuum verpackt hat, um eine Oberflächenoxidation auch nach längerer Lagerzeit in heißen und/oder feuchten Klimaregionen auszuschließen.

Diese aufwendigen Verpackungen führen jedoch bei der Herstellung, der Verpackung an sich und der Lagerung zu erheblichen Zusatzkosten.

Aufgabe der vorliegenden Erfindung ist es daher, eine Hartlotlegierung auf Kupferbasis bereit zustellen, die gegen Oberflächenoxidationen resistent ist, sowie ein Hartlötverfahren mit einer solchen Hartlotlegierung anzugeben, das eine fügestellenfehlerfreie Hartlotverbindungen gewährleistet.

Erfindungsgemäß wird diese Aufgabe durch eine Hartlotlegierung mit einer Zusammensetzung aus

NiₐSn_{b}Zn_{c}P_{d}Cu_{Rest}

mit 2 ≤ a ≤ 20 Atom%; 2 ≤ b ≤ 12 Atom%; 0,5 < c ≤ 5,0 Atom%; 6 ≤ d ≤ 16 Atom%; Rest Kupfer und beiläufigen Verunreinigungen gelöst, wobei die Gesamtanteile an Kupfer, Nickel, Zinn und Zink zwischen 80 und 95 Atom% liegen. Durch ein Zulegieren von mehr, insbesondere von deutlich mehr als 0,5 Atom% Zink wird eine signifikante Resistenz gegen Oberflächenoxidationen bewirkt. Diese Hartlotlegierungen können in Form von Pasten oder Pulvern oder Folien hergestellt werden - sowohl in kristalliner als auch in amorpher Form.

In einer bevorzugten Ausführungsform der vorliegenden Erfindung weist die Hartlotlegierung eine Zusammensetzung aus

NiₐSn_{b}2n_{c}P_{d}CU_{Rest}

mit 3 ≤ a ≤ 10 Atom%; 2 ≤ b ≤ 8 Atom%; 0,8 ≤ c ≤ 5,0 Atom%; 8 ≤ d ≤ 15 Atom%; Rest Kupfer und beiläufigen Verunreinigen auf.

Vorzugsweise werden die erfindungsgemäßen Hartlotlegierungen als homogene, duktile, amorphe Hartlotfolien bereit gestellt, die typischerweise zu 50 % amorph, vorzugsweise zu mehr als 80 % amorph sind. Neben der Hartlotfolie können die erfindungsgemäßen Hartlotlegierungen auch als Metallpulver, welche typischerweise zu Lotpasten verarbeitet werden können, hergestellt werden.

Es hat sich überraschend und im Widerspruch zu der Lehre der RU 2041783 C1 gezeigt, dass Zusätze an Zink bis maximal 5,0 Atom% die Duktilität und die Hartloteigenschaften der Hartlotlegierungen nicht negativ beeinflußen. Vielmehr bewirken gerade Zusätze an Zink von mehr als 0,5 Atom% einen wirksamen, signifikanten Schutz gegen die unerwünschten Oberflächenoxidationen.

Optimale Ergebnisse werden durch ein Zulegieren von Zink im Bereich 0,8 ≤ Zn ≤ 3,0 Atom% erzielt. In diesem Intervall kann ein Optimum zwischen der notwendigen Duktilität und der gewünschten Oberflächenoxidationsresistenz erzielt werden.

Die erfindungsgemäßen Hartlotlegierungen und insbesondere die erfindungsgemäßen homogenen und duktilen Hartlotfolien sind gegenüber Oberflächenoxidationen derart resistent, dass Massenzuwächse pro Folienfläche von weniger als 0,003 mg/cm², in den meisten Fällen von weniger als 0,002 mg/cm² nach einer Glühung an Luft bei einer Glühtemperatur von T = 175 °C und einer Glühdauer von 60 min. erzielt werden können.

Die erfindungsgemäßen Hartlotlegierungen eignen sich vorzüglich dazu, mit Dicken 15 µm ≤ D ≤ 100 µm, vorzugsweise 25 µm ≤ D ≤ 100 µm, und mit Breiten 15 mm ≤ B ≤ 300 mm gegossen zu werden, was bei den aus dem Stand der Technik bekannten Legierungen bisher wegen der auftretenden Oberflächenoxidation unmöglich war.

Die erfindungsgemäßen Hartlotlegierungen werden, sofern sie als amorphe, homogene und duktile Hartlotfolien hergestellt werden sollen, mittels Rascherstarrung gefertigt. Dabei wird eine Metallschmelze durch eine Gießdüse auf zumindest ein sich schnell drehendes Gießrad oder eine Gießtrommel gespritzt und unter einer Abkühlrate von mehr als 10⁵ °C/sek abgekühlt. Das gegossene Band wird dann typischerweise mit einer Temperatur zwischen 100 °C und 300 °C vom Gießrad abgelöst und direkt zu einem sogenannten Coil oder auf einen Spulenkörper aufgewickelt.

Der verwendete Spulenkörper kann je nach Foliendicke und Folienbreite sowie der auf dem Spulenkörper aufgewickelten Bandmenge Temperaturen bis zu 200 °C aufweisen. Diese Temperaturen auf dem Spulenkörper bewirken bei den amorphen Hartlotfolien nach dem Stand der Technik in der Regel eine gravierende Oberflächenoxidation, so dass die Bandmenge auf den Spulenkörpern begrenzt werden mußte.

Bei den amorphen Hartlotfolien gemäß der vorliegenden Erfindung muss eine solche Begrenzung der aufgewickelten Bandmenge nicht vorgenommen werden, so dass sich insgesamt der Herstellungsprozeß deutlich effizienter gestalten läßt.

Des weiteren neigen Hartlotfolien, die eine Dicke D > 25 µm und eine Breite B > 40 mm aufweisen, zu einer besonders starken Oberflächenoxidation, da sie während des Herstellungsprozesses deutlich langsamer abkühlen als dünnere und/oder schmälere Folien, so dass sie beim Ablösen von der Gießradoberfläche deutlich höhere Temperaturen aufweisen als Hartlotfolien geringerer Dicke und geringerer Breite. Diese höheren Ablösetemperaturen wiederum resultieren in höheren Temperaturen auf den Spulenkörpern, auf denen die Hartlotfolien aufgewickelt werden, so dass solche dicke und breite Folien sehr stark an ihren Oberflächen oxidieren.

Aufgrund dieses Phänomens sind derzeit Kupfer-Nickel-Zinn-Phosphor-Hartlotfolien nicht in breiten und dicken Formaten kommerziell erhältlich.

Die erfindungsgemäßen amorphen Hartlotfolien hingegen können in beliebigen Breiten und Dicken, insbesondere also auch in Dicken > 25 µm und Breiten > 40 mm hergestellt werden, ohne dass es eines aufwendigen speziellen Herstellungs- und/oder Verpackungsprozess bedürfen würde.

Die erfindungsgemäßen Hartlotlegierungen können auch als Metallpulver zum Beispiel mit einer Gasverdüsung hergestellt werden. Vorzugsweise weist das Pulver dann einen Partikeldurchmesser zwischen 38 µm und 45 µm auf. Die Hartlotlegierungspulver können in der Form einer Lotpaste vorgesehen werden. Dies ist besonders wünschenswert, wenn die zu fügenden Metallteile eine komplizierte Form haben bzw. sich für ein Lot in Form einer Folie nicht eignen.

Es kann dann ein Massenzuwachs der Hartlotlegierungspulver pro Gramm von weniger als 0,5 mg/g nach einer Glühung an Luft bei einer Glühtemperatur T = 175°C und einer Glühdauer von jeweils 60 min und 240 min erzielt werden. Die Oxidationsbeständigkeit der erfindungsgemäßen Hartlotpulver ist gegenüber zinkfreien Hartlotpulvern signifikant besser.

Die erfindungsgemäßen amorphen Hartlotfolien werden zum stoffschlüssigen Fügen zweier oder mehrerer Metallteile verwendet, wobei folgende Schritte vorgenommen werden:
- Bereitstellen einer Schmelze bestehend aus 3 ≤ Ni ≤ 10 Atom%; 2 ≤ Sn ≤ 8 Atom%; 0,5 < Zn ≤ 5,0 Atom%, vorzugsweise von 0,8 ≤ Zn ≤ 5,0 Atom%; 8 ≤ P ≤ 15 Atom%; Rest Kupfer und beiläufigen Verunreinigungen;
- Herstellen einer amorphen Hartlotfolie durch Rascherstarren der Schmelze auf einer sich bewegenden Abkühlfäche mit einer Abkühlgeschwindigkeit von mehr als ca. 10⁵ °C/sek;
- Ausbilden eines Lötverbunds durch Einbringen der Hartlotfolie zwischen die zu fügenden Metallteile;
- Erwärmen des Lötverbundes auf eine Temperatur oberhalb der Liquidustemperatur der Hartlotfolie;
- Abkühlen des Lötverbundes unter Ausbildung einer Hartlotverbindung zwischen den zu fügenden Metallteilen.

Die erfindungsgemäßen amorphen Hartlotpulver werden zum stoffschlüssigen Fügen zweier oder mehrerer Metallteile verwendet, wobei folgende Schritte vorgenommen werden:
- Bereitstellen einer Hartlotpulver bestehend aus 3 ≤ Ni ≤ 10 Atom%; 2 ≤ Sn ≤ 8 Atom%; 0,5 < Zn ≤ 5,0 Atom%, vorzugsweise von 0,8 ≤ Zn ≤ 5,0 Atom%; 8 ≤ P ≤ 15 Atom%; Rest Kupfer und beiläufigen Verunreinigungen;
- Herstellen einer Lotpaste aus dem Hartlotpulver;
- Ausbilden eines Lötverbunds durch Einbringen der Hartlotpaste zwischen die zu fügenden Metallteile;
- Erwärmen des Lötverbundes auf eine Temperatur oberhalb der Liquidustemperatur der Hartlotpulver;
- Abkühlen des Lötverbundes unter Ausbildung einer Hartloverbindung zwischen den zu fügenden Metallteilen.

Das so beschriebene stoffschlüssige Fügen stellt ein Hartlöten mit dem erfindungsgemäßen niedrigschmelzenden Kupferbasis-Hartlot dar, mit dem einwandfreie Hartlotverbindungen ohne Fügestellenfehler erzielt werden können.

Die Liquidustemperatur der erfindungsgemäßen Hartlote liegt bei ungefähr 650 °C. Mit dem erfindungsgemäßen Lötverfahren lassen sich insbesondere Metallteile aus Kupfer und/oder Kupferlegierungen stoffschlüssig fügen. Es kommen dabei typischerweise Kupferteile in Betracht, die zu Wärmetauschern oder verwandten Produkten (z.B. Ladeluftkühler oder Ölkühler) verbaut werden.

Bei der Löttemperatur benetzen dann die verflüssigten amorphen Hartlotfolien die zu verbindenden Metallteile und füllen Zinkzusätze den Lötspalt durch Kapillarkräfte vollständig, so dass keine Fügestellenfehler auftreten, die von einer Oberflächenoxidation der verwendeten Hartlotfolien herrühren.

Die Erfindung wird im Folgenden anhand von Beispielen und Vergleichsbeispielen eingehend beschrieben.

In der Tabelle 1 sind Vergleichsergebnisse bezüglich der auftretenden Oberflächenoxidation unmittelbar 1 Stunde nach der Herstellung bzw. 2 Wochen nach einer Lagerung bei 21 °C und einer relativen Luftfeuchtigkeit von 40% wiedergegeben.

**Tabelle 1**

| Legierung | | Cu | Ni | Sn | Zn | P | Oberflächenoxidation 1 Stunde nach der Herstellung | Oberflächenoxidation nach 2 Wochen Lagerung bei 21°C und 40% Luftfeuchtigkeit |
|---|---|---|---|---|---|---|---|---|
| 1 | wt. % | Rest | 5,7 | 9,0 | 0 | 6,2 | Band ist goldfarbig oxidiert, mit lokal braunen, violetten und bläulichen Stellen | Leuchtend goldgelb mit massiven bläulichen und grünlichen Stellen, welche sich teilweise über komplette Bandabschnitte erstrecken |
| | at. % | Rest | 6,0 | 4,7 | 0 | 12,4 | | |
| 2 | wt. % | Rest | 10,0 | 9,4 | 0 | 6,7 | Band ist goldfarbig oxidiert, mit lokal braunen und grünlichen und bläulichen Stellen | Leuchtend goldgelb mit bläulichen und grünlichen Stellen, welche sich teilweise über komplette Bandabschnitte erstrecken |
| | at. % | Rest | 10,5 | 4,9 | 0 | 13,3 | | |
| 3 | wt. % | Rest | 5,7 | 11,6 | 0 | 6,5 | Band ist goldfarbig oxidiert, mit lokal braunen und bläulichen Stellen | Goldgelb mit dunkelvioletten und blauen Verfärbungen, welche sich teilweise über komplette Bandabschnitte erstrecken |
| | at. % | Rest | 6,0 | 6,1 | 0 | 13,1 | | |
| 4 | wt. % | Rest | 5,7 | 9,3 | 0 | 6,5 | Goldfarbig oxidiert mit violetten Verfärbungen | Leuchtend goldgelb mit bläulichen und grünlichen Stellen, welche sich teilweise über komplette Bandabschnitte erstrecken |
| | at. % | Rest | 6,0 | 4,8 | 0 | 12,9 | | |
| 5 | wt. % | Rest | 5,8 | 9,2 | 0 | 5,0 | Goldfarbig mit braunen und violetten Verfärbungen | Goldgelb mit dunkelvioletten und blauen Verfärbungen, welche sich teilweise über komplette Bandabschnitte erstrecken |
| | at. % | Rest | 6,2 | 4,8 | 0 | 10,1 | | |
| 6 | wt. % | Rest | 5,7 | 9,0 | 0,6 | 6,5 | Band ist vollständig metallisch glänzend | Band ist vollständig metallisch glänzend |
| | at. % | Rest | 6,0 | 4,8 | 0,6 | 13,0 | | |
| 7 | wt. % | Rest | 5,7 | 9,3 | 0,8 | 6,5 | Band ist vollständig metallisch glänzend | Band ist vollständig metallisch glänzend |
| | at. % | Rest | 6,0 | 4,8 | 0,8 | 13,0 | | |
| 8 | wt. % | Rest | 5,7 | 9,3 | 1,0 | 6,5 | Band ist vollständig metallisch glänzend | Band ist vollständig metallisch glänzend |
| | at. % | Rest | 6,0 | 4,8 | 1,0 | 13,0 | | |
| 9 | wt% | Rest | 5,7 | 9,3 | 1,5 | 6,5 | Band ist vollständig metallisch glänzend | Band ist vollständig metallisch glänzend |
| | at. % | Rest | 6,0 | 4,8 | 1,4 | 12,9 | | |
| 10 | wt. % | Rest | 5,7 | 9,3 | 2,5 | 6,5 | Band ist vollständig metallisch glänzend . | Band ist vollständig metallisch glänzend |
| | at. % | Rest | 6,0 | 4,8 | 2,4 | 13,0 | | |

Die Hartlotfolien mit den laufenden Nummern 1 bis 5 sind Hartlotfolien gemäß dem Stand der Technik wohingegen die Hartlotfolien mit den laufenden Nummern 6 bis 10 Hartlotfolien nach der vorliegenden Erfindung sind.

Wie der Tabelle 1 zu entnehmen ist, wiesen die Hartlotfolien nach dem Stand der Technik bereits unmittelbar, d.h. also 1 Stunde nach der Herstellung massive Oxidationserscheinungen auf. Es wurden bräunliche, grünliche bzw. bläuliche Verfärbungen festgestellt, die zunächst lokal zu sehen waren.

Nach einer Lagerzeit von 2 Wochen hatten sich diese lokalen Verfärbungen über weite Bandabschnitte ausgebreitet, so dass größere Bandabschnitte nun goldgelb mit bläulichen und grünlichen Verfärbungen belegt waren.

Die 6 Legierungen gemäß der vorliegenden Erfindung waren hingegen sowohl unmittelbar nach der Herstellung als auch 2 Wochen nach einer Lagerung bei 21 °C und einer relativen Luftfeuchtigkeit von 40 % metallisch silbrig glänzend und frei von jeglicher Verfärbung.

Anhand verschiedener Ausführungsbeispiele der vorliegenden Erfindung und Vergleichsbeispielen aus dem Stand der Technik wurde die Oxidationsbeständigkeit auch quantitativ untersucht. Diese quantitative Erfassung wird im Folgenden anhand fünfer Figuren veranschaulicht. Dabei zeigen:
- Figur 1:: Die Oberflächenoxidation bei einer Glühtemperatur von 175,°C in Abhängigkeit von der Glühdauer an Luft gemessen als Massenzuwachs pro Folienfläche von zinkfreien und zinkhaltigen amorphen Hartlotfolien;
- Figur 2:: Die Oberflächenoxidation bei einer Glühtemperatur von 175 °C als Funktion der Glühdauer an Luft gemessen als Massenzuwachs pro Folienfläche unter Variation des Zinkgehaltes;
- Figur 3:: Die Oberflächenoxidation bei einer Glühtemperatur von 175°C als Funktion der Glühdauer an Luft gemessen als Massenzuwachs pro Folienfläche von zinkfreien und zinkhaltigen wenigstens teilamorphen Folien;
- Figur 4:: Die Oberflächenoxidation bei einer Glühtemperatur von 175 °C als Funktion der Glühdauer an Luft gemessen als Massenzuwachs pro Folienfläche von zinkfreien, einer indiumhaltigen und einer galliumhaltigen Hartlotfolie;
- Figur 5:: Die Oxidation bei einer Glühtemperatur von 175°C als Funktion der Glühdauer an Luft gemessen als Massenzuwachs pro Gramm von zinkfreien und zinkhaltigen Legierungspulvern.

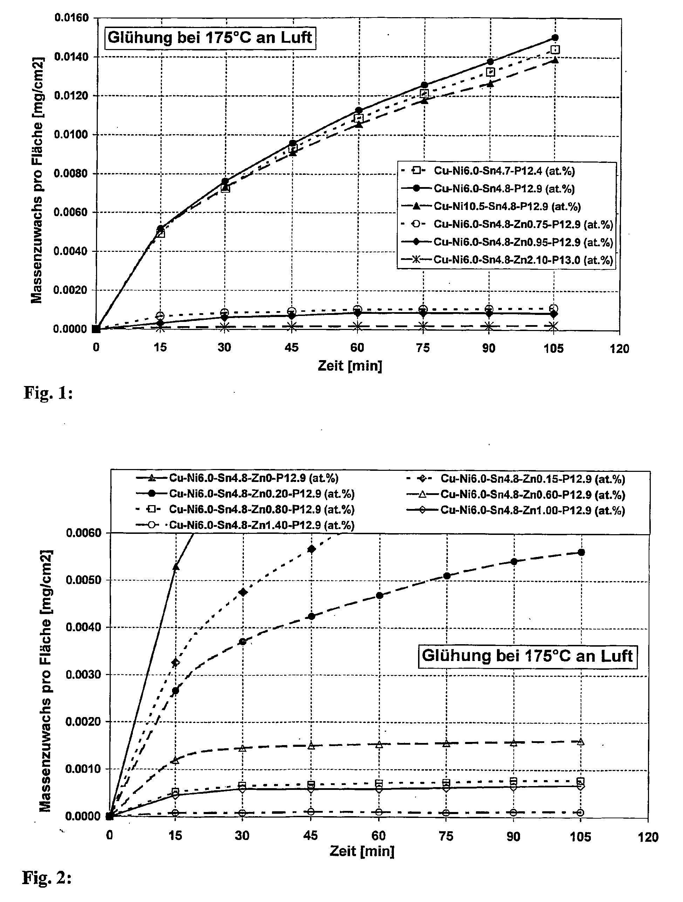

Die in Figuren 1 bis 4 gezeigten amorphen Hartlotfolien wurden über Rascherstarrung hergestellt und waren zumindest zu einem Grad von 50% amorph. Die untersuchten Hartlotfolien wiesen eine Breite B = 60 mm und eine Dicke von D = 25 µm auf. Es wurden Abschnitte von 100 mm Länge aus den Hartlotfolien abgelängt.

Diese abgelängten Folienabschnitte wurden dann bei einer Glühtemperatur von 175 °C an Luft geglüht. Die auftretende bzw. nicht auftretende Oxidation an den Oberflächen der untersuchten Hartlotfolien konnte als Massenzuwachs über Wiegen der einzelnen Proben quantifiziert werden.

Wie der Figur 1 ist zu entnehmen, wiesen die Hartlotfolien mit einem Gehalt an Zink von mehr als 0,5 Atom% eine signifikant verbesserte Oxidationsbeständigkeit auf. Des weiteren ist der Figur 1 zu entnehmen, dass Hartlotfolien aus dem Stand der Technik auch nach Glühzeiten von mehr als 105 Minuten weiterhin kontinuierlich oxidierten. Die in der Figur 1 gezeigten zinkhaltigen Hartlotfolien nach der vorliegenden Erfindung wiesen hingegen nach einer Glühzeit von ungefähr 30 Minuten keinen weiteren Massenzuwachs auf.

In der Figur 2 wurden die Zinkgehalte von zinkfrei bis zu einem Zinkgehalt von 1,4 Atom% variiert. Der Figur 2 ist zu entnehmen, dass Hartlotfolien mit einem Zinkgehalt oberhalb 0,5 Atom% auch nach einer Glühdauer von 105 Minuten noch eine kontinuierliche Massenzunahme pro Folienfläche aufweisen. Diese Folien scheinen für längere Zeit weiter zu oxidieren.

Folien mit einem Zinkzusatz von ungefähr 0,8 Atom% oder mehr scheinen jedoch bereits nach einer Glühdauer von 30 bzw. 45 Minuten in eine Art "Sättigung" zu gehen, so dass keine weitere Oxidation mehr stattfindet.

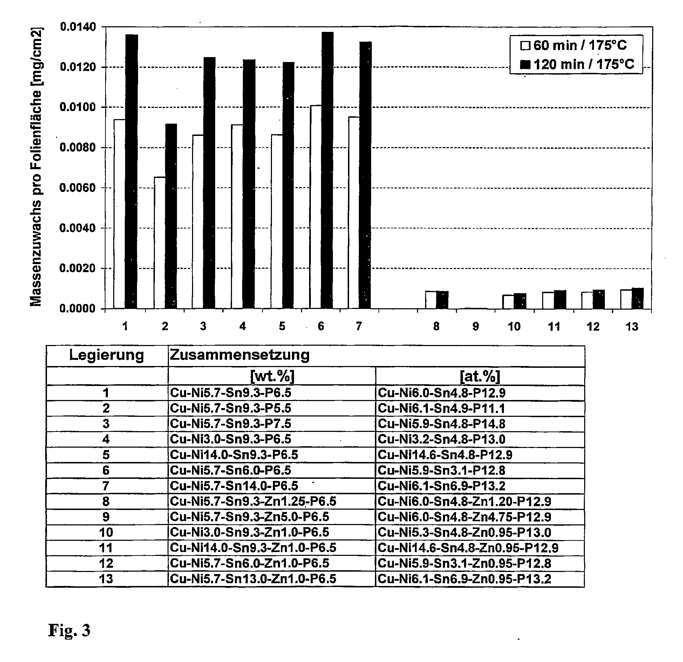

Figur 3 zeigt die Oxidation weiterer Folien zinkfreier und zinkhaltiger Legierungszusammensetzungen, die durch den Massenzuwachs nach einer Glühbehandlung bei 175°C jeweils 60 und 120 Minuten an Luft gemessen wird. Der Figur 3 ist zu entnehmen, dass alle Folien, die gemäß der Erfindung einen Zinkzusatz aufweisen, eine signifikant verbesserte Oxidationsbeständigkeit aufweisen.

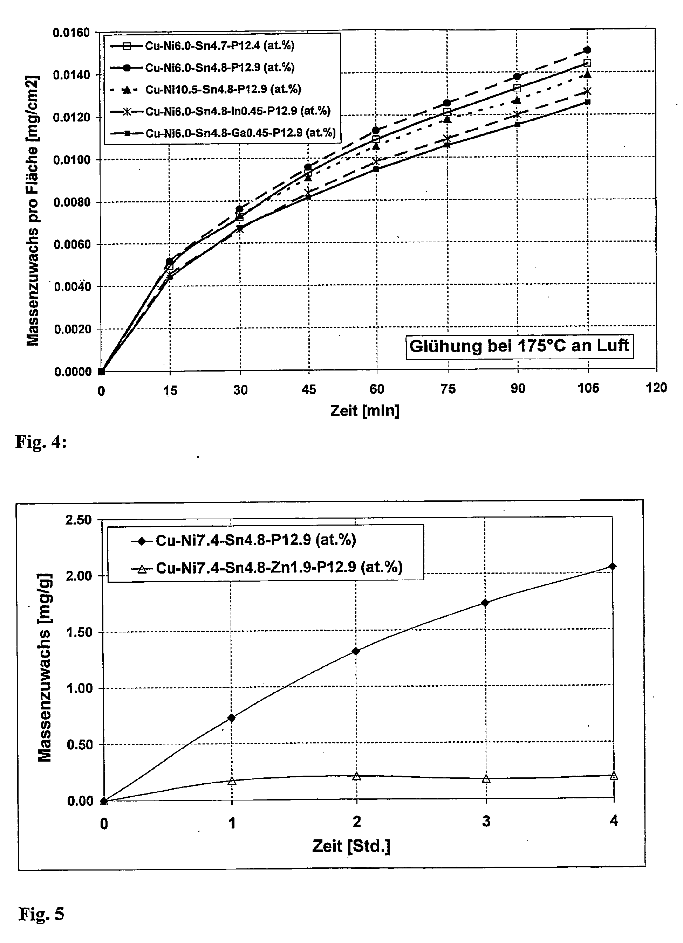

Der Figur 4 schließlich ist zu entnehmen, dass die Verwendung anderer Zusätze, insbesondere von Zusätzen von Indium und Gallium keine Verbesserung der Oxidationsbeständigkeit bewirkt.

Neben Hartlotfolien können die erfindungsgemäße Hartlotlegierungen auch als Hartlotpulver hergestellt werden. Die Hartlotpulver mit der erfindungsgemäßen Zusammensetzungen können zu Lotpasten verarbeitet werden.

Hartlotpulver werden typischerweise mit einer Gasverdüsung hergestellt und weisen einen Durchmesser zwischen 36 bis 45µm, d₅₀-Wert von 38µm auf. Die Pulver werden anschließend bei 175°C jeweils 60 und 120 Minuten an Luft ausgelagert. Der Figur 5 ist zu entnehmen, dass ein Zn-Zusatz auch in dem Cu-Ni-Sn-P Legierungspulver wie bei der Folie zu einer signifikant verbesserten Oxidationsbeständigkeit führt, nämlich zu einem Massenzuwachs von weniger als 0,50mg/g, insbesondere von weniger als 0,25mg/g nach einer Glühung an Luft bei einer Glühtemperatur T = 175 °C und einer Glühdauer von 60 min, wobei nach weiteren 180 min kein weiterer Massenzuwachs erfolgt.

## Patentansprüche

1. Hartlotlegierung mit einer Zusammensetzung aus
NiₐSn_{b}Zn_{c}P_{d}Cu_{Rest}
mit 2 ≤ a ≤ 20 Atom%; 2 ≤ b ≤ 12 Atom%; 0,5 < c ≤ 5,0 Atom%; 6 ≤ d ≤ 16 Atom%; Rest Kupfer und beiläufigen Verunreinigungen, wobei die Gesamtanteile an Kupfer, Nickel, Zinn und Zink zwischen 80 und 95 Atom% liegen.

2. Hartlotlegierung nach Anspruch 1,
mit einer Zusammensetzung aus
NiₐSn_{b}Zn_{c}P_{d}Cu_{Rest}
mit 3 ≤ a ≤ 10 Atom%; 2 ≤ b ≤ 8 Atom%; 0,8 < c ≤ 5,0 Atom%; 8 ≤ d ≤ 15 Atom%; Rest Kupfer und beiläufigen Verunreinigungen.

3. Homogene, duktile Hartlotfolie mit einer Zusammensetzung aus
NiₐSn_{b}Zn_{c}P_{d}Cu_{Rest}
mit 2 ≤ a ≤ 20 Atom%; 2 ≤ b ≤ 12 Atom%; 0,5 < c ≤ 5,0 Atom%; 6 ≤ d ≤ 16 Atom%; Rest Kupfer und beiläufigen Verunreinigungen, wobei die Gesamtanteile an Kupfer, Nickel, Zinn und Zink zwischen 80 und 95 Atom% liegen.

4. Homogene, duktile Hartlotfolie nach Anspruch 3, mit einer Zusammensetzung aus
NiₐSn_{b}Zn_{c}P_{d}Cu_{Rest}
mit 3 ≤ a ≤ 10 Atom%; 2 ≤ b ≤ 8 Atom%; 0,8 ≤ c ≤ 3,0 Atom%; 8 ≤ d ≤ 15 Atom%; Rest Kupfer und beiläufigen Verunreinigungen, wobei die Gesamtanteile an Kupfer, Nickel, Zinn und Zink zwischen 80 und 95 Atom% liegen.

5. Hartlotfolie nach einem der Ansprüche 3 bis 4,
**gekennzeichnet durch,**
einen Massenzuwachs pro Folienfläche von weniger als 0,003 mg/cm2 nach einer Glühung an Luft bei einer Glühtemperatur T = 175 °C und einer Glühdauer von 60 min.

6. Hartlotfolie nach Anspruch 5,
**gekennzeichnet durch,**
einen Massenzuwachs pro Folienfläche von weniger als 0,002 mg/cm2 nach einer Glühung an Luft bei einer Glühtemperatur T = 175 °C und einer Glühdauer von 60 min.

7. Hartlotfolie nach einem der Ansprüche 3 bis 6,
**dadurch gekennzeichnet,**
**dass** die Hartlotfolie zu mindestens 80% amorph ist.

8. Hartlotfolie nach einem der Ansprüche 3 bis 7,
**gekennzeichnet durch**
eine Dicke 25 µm ≤ D ≤ 100 µm.

9. Hartlotfolie nach einem der Ansprüche 3 bis 8,
**gekennzeichnet durch**
eine Breite 40 mm ≤ B ≤ 300 mm.

10. Hartlotfolie nach Anspruch 7,
**gekennzeichnet durch**
eine Breite B ≥ 60 mm.

11. Hartlotpulver mit einer Zusammensetzung aus
NiₐSn_{b}Zn_{c}P_{d}CU_{Rest}
mit 2 ≤ a ≤ 20 Atom%; 2 ≤ b ≤ 12 Atom%; 0, 5 < c ≤ 5,0 Atom%; 6 ≤ d ≤ 16 Atom%; Rest Kupfer und beiläufigen Verunreinigungen, wobei die Gesamtanteile an Kupfer, Nickel, Zinn und Zink zwischen 80 und 95 Atom% liegen.

12. Hartlotpulver nach Anspruch 11, mit einer Zusammensetzung aus
NiₐSn_{b}Zn_{c}P_{d}Cu_{Rest}
mit 3 ≤ a ≤ 10 Atom%; 2 ≤ b ≤ 8 Atom%; 0,8 ≤ c ≤ 3,0 Atom%; 8 ≤ d ≤ 15 Atom%; Rest Kupfer und beiläufigen Verunreinigungen, wobei die Gesamtanteile an Kupfer, Nickel, Zinn und Zink zwischen 80 und 95 Atom% liegen.

13. Hartlotpulver nach einem der Ansprüche 11 bis 12,
**gekennzeichnet durch,** dass
das Hartlotpulver einen Durchmesser zwischen 38 µm und 45 µm aufweist.

14. Hartlotpulver nach einem der Ansprüche 11 bis 13,
**gekennzeichnet durch,** dass
das Hartlotpulver in Form einer Lotpaste vorgesehen ist.

15. Hartlotpulver nach einem der Ansprüche 11 bis 14,
**gekennzeichnet durch,**
einen Massenzuwachs von weniger als 0,50 mg/g nach einer Glühung an Luft bei einer Glühtemperatur T = 175 °C und einer Glühdauer von 60 min.

16. Verfahren zum stoffschlüssigen Fügen zweier oder mehrer Metallteile mit folgenden Schritten:
a)Bereitstellen einer Schmelze bestehend aus 3 ≤ Ni ≤ 10 Atom%; 2 ≤ Sn ≤ 8 Atom%; 0,5 < Zn ≤ 5,0 Atom%; 8 ≤ p ≤ 15 Atom%; Rest Kupfer und beiläufigen Verunreinigungen;
b)Herstellen einer amorphen Hartlotfolie durch Rascherstarren der Schmelze auf einer sich bewegenden Abkühlfläche mit einer Abkühlgeschwindigkeit von mehr als ca.10⁵ °C/sek:
c)Ausbilden eines Lötverbunds durch Einbringen der Hartlotfolie zwischen die zu fügenden Metallteile;
d)Erwärmen des Lötverbundes auf eine Temperatur oberhalb der Liquidustemperatur der Hartlotfolie;
e)Abkühlen des Lötverbundes unter Ausbildung einer Hartlotverbindung zwischen den zu fügenden Metallteilen.

17. Verfahren zum stoffschlüssigen Fügen zweier oder mehrer Metallteile mit folgenden Schritten:
a)Bereitstellen einer Schmelze bestehend aus 3 ≤ Ni ≤ 10 Atom%; 2 ≤ Sn ≤ 8 Atom%; 0,8 ≤ Zn ≤ 5,0 Atom%; 8 ≤ P ≤ 15 Atom%; Rest Kupfer und beiläufigen Verunreinigungen;
b)Herstellen einer amorphen Hartlotfolie durch Rascherstarren der Schmelze auf einer sich bewegenden Abkühlfläche mit einer Abkühlgeschwindigkeit von mehr als ca.10⁵ °C/sek;
c)Ausbilden eines Lötverbunds durch Einbringen der Hartlotfolie zwischen die zu fügenden Metallteile;
d) Erwärmen des Lötverbundes auf eine Temperatur oberhalb der Liquidustemperatur der Hartlotfolie;
e)Abkühlen des Lötverbundes unter Ausbildung einer Hartlotverbindung zwischen den zu fügenden Metallteilen.

18. Verfahren zum stoffschlüssigen Fügen zweier oder
mehrer Metallteile mit folgenden Schritten:
a)Bereitstellen einer Hartlotpulver bestehend aus 3 ≤ Ni ≤ 10 Atom%; 2 ≤ sn ≤ 8 Atom%; 0,5 < Zn ≤ 5,0 Atom%; 8 ≤ P ≤ 15. Atom%; Rest Kupfer und beiläufigen Verunreinigungen;
b)Herstellen einer Lotpaste aus dem Hartlotpulver;
c) Ausbilden eines Lötverbunds durch Einbringen der Hartlotpaste zwischen die zu fügenden Metallteile;
d)Erwärmen des Lötverbundes auf eine Temperatur oberhalb der Liquidustemperatur der Hartlotpulver;
e)Abkühlen des Lötverbundes unter Ausbildung einer Hartlotverbindung zwischen den zu fügenden Metallteilen.

19. Verfahren zum stoffschlüssigen Fügen zweier oder mehrer Metallteile mit folgenden Schritten:
a)Bereitstellen einer Hartlotpulver bestehend aus 3 ≤ Ni ≤ 10 Atom%; 2 ≤ Sn ≤ 8 Atom%; 0,8 ≤ Zn ≤ 5,0 Atom%; 8 ≤ P ≤ 15 Atom%; Rest Kupfer und beiläufigen Verunreinigungen;
b)Herstellen einer Lotpaste aus dem Hartlotpulver;
c)Ausbilden eines Lötverbunds durch Einbringen der Hartlotpaste zwischen die zu fügenden Metallteile;
d)Erwärmen des Lötverbundes auf eine Temperatur oberhalb der Liquidustemperatur der Hartlotpulver;
e)Abkühlen des Lötverbundes unter Ausbildung einer Hartlotverbindung zwischen den zu fügenden Metallteilen.

## Claims

1. Brazing alloy with a composition of
NiₐSn_{b}Zn_{c}P_{d}Cu_{Remainder}
where 2 ≤ a ≤ 20 atom%; 2 ≤ b ≤ 12 atom%; 0.5 < c ≤ 5.0 atom%; 6 ≤ d ≤ 16 atom%; remainder copper and incidental impurities, wherein the total amount of copper, nickel, tin and zinc lies between 80 and 95 atom%.

2. The brazing alloy according to claim 1, with a composition of
NiₐSn_{b}Zn_{c}P_{d}Cu_{Remainder}
where 3 ≤ a ≤ 10 atom%; 2 ≤ b ≤ 8 atom%; 0.8 < c ≤ 5.0 atom%; 8 ≤ d ≤ 15 atom%; remainder copper and incidental impurities.

3. A homogenous, ductile brazing foil with a composition of
NiₐSn_{b}Zn_{c}P_{d}Cu_{Remainder}
where 2 ≤ a ≤ 20 atom%; 2 ≤ b ≤ 12 atom%; 0.5 < c ≤ 5.0 atom%; 6 ≤ d ≤ 16 atom%; remainder copper and incidental impurities, wherein the total amount of copper, nickel, tin and zinc lies between 80 and 95 atom%.

4. The homogenous, ductile brazing foil according to claim 3, with a composition of
NiₐSn_{b}Zn_{c}P_{d}Cu_{Remainder}
where 3 ≤ a ≤ 10 atom%; 2 ≤ b ≤ 8 atom%; 0.8 ≤ c ≤ 3.0 atom%; 8 ≤ d ≤ 15 atom%; remainder copper and incidental impurities, wherein the total amount of copper, nickel, tin and zinc lies between 80 and 95 atom%.

5. The brazing foil according to claim 3 or 4, **characterized by** an increase in mass per unit foil area of less than 0.003 mg/cm² after annealing in air at an annealing temperature T = 175°C and for an annealing time of 60 min.

6. The brazing foil according to claim 5, **characterized by** an increase in mass per unit foil area of less than 0.002 mg/cm² after annealing in air at an annealing temperature T = 175°C and for an annealing time of 60 min.

7. The brazing foil according to one of claims 3 to 6, **characterized in that** the brazing foil is at least 80% amorphous.

8. The brazing foil according to one of claims 3 to 7, **characterized by** a thickness 25 um ≤ D ≤ 100 µm.

9. The brazing foil according to one of claims 3 to 8, **characterized by** a width 40 mm ≤ B ≤ 300 mm.

10. The brazing foil according to claim 7, **characterized by** a width B ≥ 60 mm.

11. A brazing powder with a composition of
NiₐSn_{b}Zn_{c}P_{d}Cu_{Remainder}
where 2 ≤ a ≤ 20 atom%; 2 ≤ b ≤ 12 atom%; 0.5 < c ≤ 5.0 atom%; 6 ≤ d ≤ 16 atom%; remainder copper and incidental impurities, wherein the total amount of copper, nickel, tin and zinc lies between 80 and 95 atom%.

12. The brazing powder according to claim 11, with a composition of
Niₐsn_{b}Zn_{c}P_{d}Cu_{Remainder}
where 3 ≤ a ≤ 10 atom%; 2 ≤ b ≤ 8 atom%; 0.8 ≤ c ≤ 3.0 atom%; 8 ≤ d ≤ 15 atom%; remainder copper and incidental impurities, wherein the total amount of copper, nickel, tin and zinc lies between 80 and 95 atom%.

13. The brazing powder according to claim 11 or 12, **characterized in that** the brazing powder has a diameter of between 38 µm and 45 µm.

14. The brazing powder according to one of claims 11 to 13, **characterized in that** the brazing powder is provided in the form of a solder paste.

15. The brazing powder according to one of claims 11 to 14, **characterized by** an increase in mass of less than 0.50 mg/g after annealing in air at an annealing temperature T = 175°C and for an annealing time of 60 min.

16. A process for the cohesive joining of two or more metal parts comprising the steps of:
a) providing a melt consisting of 3 ≤ Ni ≤ 10 atom%; 2 ≤ Sn ≤ 8 atom%; 0.5 < Zn ≤ 5.0 atom%; 8 ≤ P ≤ 15 atom%; remainder copper and incidental impurities;
b) producing an amorphous brazing foil by rapid solidification of the melt on a moving cooling surface at a cooling rate of more than approx. 10⁵°C/sec;
c) forming a soldering composite by introducing the brazing foil between the metal parts that are to be joined;
d) heating the soldering composite to a temperature above the liquidus point of the brazing foil;
e) cooling the soldering composite so as to form a brazed join between the metal parts to be joined.

17. A process for the cohesive joining of two or more metal parts comprising the steps of:
a) providing a melt consisting of 3 ≤ Ni ≤ 10 atom%; 2 ≤ Sn ≤ 8 atom%; 0.8 ≤ Zn ≤ 5.0 atom%; 8 ≤ P ≤ 15 atom%; remainder copper and incidental impurities;
b) producing an amorphous brazing foil by rapid solidification of the melt on a moving cooling surface at a cooling rate of more than approx. 10⁵°C/sec;
c) forming a soldering composite by introducing the brazing foil between the metal parts that are to be joined;
d) heating the soldering composite to a temperature above the liquidus point of the brazing foil;
e) cooling the soldering composite so as to form a brazed join between the metal parts to be joined.

18. A process for the cohesive joining of two or more metal parts comprising the steps of:
a) providing a brazing powder consisting of 3 ≤ Ni ≤ 10 atom%; 2 ≤ Sn ≤ 8 atom%; 0.5 < Zn ≤ 5.0 atom%; 8 ≤ P ≤ 15 atom%; remainder copper and incidental impurities;
b) producing a solder paste from the brazing powder;
c) forming a soldering composite by introducing the brazing paste between the metal parts that are to be joined;
d) heating the soldering composite to a temperature above the liquidus point of the brazing powder;
e) cooling the soldering composite so as to form a brazed join between the metal parts to be joined.

19. A process for the cohesive joining of two or more metal parts comprising the steps of:
a) providing a brazing powder consisting of 3 ≤ Ni ≤ 10 atom%; 2 ≤ Sn ≤ 8 atom%; 0.8 ≤ Zn ≤ 5.0 atom%; 8 ≤ P ≤ 15 atom%; remainder copper and incidental impurities;
b) producing a solder paste from the brazing powder;
c) forming a soldering composite by introducing the brazing paste between the metal parts that are to be joined;
d) heating the soldering composite to a temperature above the liquidus point of the brazing powder;
e) cooling the soldering composite so as to form a brazed join between the metal parts to be joined.

## Revendications

1. Alliage de brasure présentant une composition de formule
NiₐSn_{b}Zn_{c}P_{d}Cu_{Reste}
avec 2 ≤ a ≤ 20 % atomiques; 2 ≤ b ≤ 12 % atomiques; 0,5 < c ≤ 5,0 % atomiques; 6 ≤ d ≤ 16 % atomiques; le reste étant du cuivre et des impuretés incidentes, dans lequel les fractions totales de cuivre, nickel, étain et zinc représentent entre 80 et 95 % atomiques.

2. Alliage de brasure selon la revendication 1, présentant une composition de formule
NiₐSn_{b}Zn_{c}P_{d}Cu_{Reste}
avec 3 ≤ a ≤ 10 % atomiques; 2 ≤ b ≤ 8 % atomiques; 0,8 < c ≤ 5,0 % atomiques; 8 ≤ d ≤ 15 % atomiques; le reste étant du cuivre et des impuretés incidentes.

3. Feuille de brasure ductile homogène, présentant une composition de formule
NiₐSn_{b}Zn_{c}P_{d}Cu_{Reste}
avec 2 ≤ a ≤ 20 % atomiques; 2 ≤ b ≤ 12 % atomiques; 0,5 < c ≤ 5,0 % atomiques; 6 ≤ d ≤ 16 % atomiques; le reste étant du cuivre et des impuretés incidentes, dans lequel les fractions totales de cuivre, nickel, étain et zinc représentent entre 80 et 95 % atomiques.

4. Feuille de brasure ductile homogène selon la revendication 3, présentant une composition de formule
NiₐSn_{b}Zn_{c}P_{d}Cuᵣₑₛₜₑ
avec 3 ≤ a ≤ 10 % atomiques; 2 ≤ b ≤ 8 % atomiques; 0,8 ≤ c ≤ 3,0 % atomiques; 8 ≤ d ≤ 15 % atomiques; le reste étant du cuivre et des impuretés incidentes, dans lequel les fractions totales de cuivre, nickel, étain et zinc représentent entre 80 et 95 % atomiques.

5. Feuille de brasure selon l'une quelconque des revendications 3 à 4, **caractérisée par** une croissance massique par face de feuille de moins de 0,003 mg/cm² après un recuit dans l'air à une température de recuit T = 175°C et une durée de recuit de 60 minutes.

6. Feuille de brasure selon la revendication 5, **caractérisée par** une croissance massique par face de feuille de moins de 0,002 mg/cm² après un recuit dans l'air à une température de recuit T = 175°C et une durée de recuit de 60 minutes.

7. Feuille de brasure selon l'une quelconque des revendications 3 à 6, **caractérisée en ce que** la feuille de brasure est au moins à 80 % amorphe.

8. Feuille de brasure selon l'une quelconque des revendications 3 à 7, **caractérisée par** une épaisseur 25 µm ≤ D ≤ 100 µm.

9. Feuille de brasure selon l'une quelconque des revendications 3 à 8, **caractérisée par** une largeur 40 mm ≤ B ≤ 300 mm.

10. Feuille de brasure selon la revendication 7, **caractérisée par** une largeur B ≥ 60 mm.

11. Poudre de brasure, présentant une composition de formule
NiₐSn_{b}Zn_{c}P_{d}Cuᵣₑₛₜₑ
avec 2 ≤ a ≤ 20 % atomiques; 2 ≤ b ≤ 12 % atomiques; 0,5 < c ≤ 5,0 % atomiques; 6 ≤ d ≤ 16 % atomiques; le reste étant du cuivre et des impuretés incidentes, dans laquelle les fractions totales de cuivre, nickel, étain et zinc représentent entre 80 et 95 % atomiques.

12. Poudre de brasure selon la revendication 11, présentant une composition de formule
NiₐSn_{b}Zn_{c}P_{d}Cuᵣₑₛₜₑ
avec 3 ≤ a ≤ 10 % atomiques; 2 ≤ b ≤ 8 % atomiques; 0,8 ≤ c ≤ 3,0 % atomiques; 8 ≤ d ≤ 15 % atomiques; le reste étant du cuivre et des impuretés incidentes, dans laquelle les fractions totales de cuivre, nickel, étain et zinc représentent entre 80 et 95 % atomiques.

13. Poudre de brasure selon l'une quelconque des revendications 11 à 12, **caractérisée en ce que** la poudre de brasure présente un diamètre compris entre 38 µm et 45 µm.

14. Poudre de brasure selon l'une quelconque des revendications 11 à 13, **caractérisée en ce que** la poudre de brasure est prévue sous la forme d'une pâte de brasure.

15. Poudre de brasure selon l'une quelconque des revendications 11 à 14, **caractérisée par** une croissance massique de moins de 0,50 mg/g après un recuit dans l'air à une température de recuit T = 175°C et une durée de recuit de 60 minutes.

16. Procédé pour l'assemblage par complémentarité de matière de deux pièces métalliques ou plus, comprenant les étapes suivantes:
a) préparer une fonte composée de 3 ≤ Ni ≤ 10 % atomiques; 2 ≤ Sn ≤ 8 % atomiques; 0,5 < Zn ≤ 5,0 % atomiques; 8 ≤ P ≤ 15 % atomiques; le reste étant du cuivre et des impuretés incidentes;
b) fabriquer une feuille de brasure amorphe par solidification rapide de la fonte sur une surface de refroidissement en mouvement avec une vitesse de refroidissement de plus d'environ 10⁵°C/s;
c) former un composite de brasage par apport de la feuille de brasure entre les pièces métalliques à assembler;
d) chauffer le composite de brasage à une température supérieure à la température de liquidus de la feuille de brasure;
e) refroidir le composite de brasage en formant un assemblage de brasure entre les pièces métalliques à assembler.

17. Procédé pour l'assemblage par complémentarité de matière de deux pièces métalliques ou plus, comprenant les étapes suivantes:
a) préparer une fonte composée de 3 ≤ Ni ≤ 10 % atomiques; 2 ≤ Sn ≤ 8 % atomiques; 0,8 ≤ Zn ≤ 5,0 % atomiques; 8 ≤ P ≤ 15 % atomiques; le reste étant du cuivre et des impuretés incidentes;
b) fabriquer une feuille de brasure amorphe par solidification rapide de la fonte sur une surface de refroidissement en mouvement avec une vitesse de refroidissement de plus d'environ 10⁵°C/s;
c) former un composite de brasage par apport de la feuille de brasure entre les pièces métalliques à assembler;
d) chauffer le composite de brasage à une température supérieure à la température de liquidus de la feuille de brasure;
e) refroidir le composite de brasage en formant un assemblage de brasure entre les pièces métalliques à assembler.

18. Procédé pour l'assemblage par complémentarité de matière de deux pièces métalliques ou plus, comprenant les étapes suivantes:
a) préparer une poudre de brasure composée de 3 ≤ Ni ≤ 10 % atomiques; 2 ≤ Sn ≤ 8 % atomiques; 0,5 < Zn ≤ 5,0 % atomiques; 8 ≤ P ≤ 15 % atomiques; le reste étant du cuivre et des impuretés incidentes;
b) fabriquer une pâte de brasure à partir de la poudre de brasure;
c) former un composite de brasage par apport de la pâte de brasure entre les pièces métalliques à assembler;
d) chauffer le composite de brasage à une température supérieure à la température de liquidus de la poudre de brasure;
e) refroidir le composite de brasage en formant un assemblage de brasure entre les pièces métalliques à assembler.

19. Procédé pour l'assemblage par complémentarité de matière de deux pièces métalliques ou plus, comprenant les étapes suivantes:
a) préparer une poudre de brasure composée de 3 ≤ Ni ≤ 10 % atomiques; 2 ≤ Sn ≤ 8 % atomiques; 0,8 ≤ Zn ≤ 5,0 % atomiques; 8 ≤ P ≤ 15 % atomiques; le reste étant du cuivre et des impuretés incidentes;
b) fabriquer une pâte de brasure à partir de la poudre de brasure;
c) former un composite de brasage par apport de la pâte de brasure entre les pièces métalliques à assembler;
d) chauffer le composite de brasage à une température supérieure à la température de liquidus de la poudre de brasure;
e) refroidir le composite de brasage en formant un assemblage de brasure entre les pièces métalliques à assembler.
